# EUROPÄISCHE PATENTSCHRIFT

(11) **EP 3 776 815 B1**
(45) Veröffentlichungstag und Bekanntmachung des Hinweises auf die Patenterteilung: **19.01.2022**
(21) Anmeldenummer: 19714624.4
(22) Anmeldetag: 28.03.2019
(51) Int. Cl.: H02K 5/10, H02K 5/22

(54) **ELEKTRISCHER ANTRIEB**
ELECTRIC DRIVE
ENTRAÎNEMENT ÉLECTRIQUE

(30) Priorität: 28.03.2018 DE 102018204790
(43) Veröffentlichungstag der Anmeldung: 17.02.2021
(73) Patentinhaber: Robert Bosch GmbH, 70442 Stuttgart (DE)
(72) Erfinder: BITZER, Harold, 77815 Buehl (DE); MERZ, Harald, 76547 Sinzheim (DE)
(86) Internationale Anmeldenummer: PCT/EP2019/057878
(87) Internationale Veröffentlichungsnummer: WO 2019/185807

(56) Entgegenhaltungen:
- EP-A1- 3 190 670
- WO-A1-2011/154181
- DE-A1-102013 216 465
- JP-A- S5 668 237
- US-B1- 6 628 024

## Beschreibung

Die Erfindung betrifft einen elektrischen Antrieb, insbesondere einen Elektromotor eines Motorkühlungsgebläses oder eines ABS/ESP eines Kraftfahrzeugs.

### Stand der Technik

Für die Anwendung von Elektromotoren im Bereich der Motorkühlgebläse und/oder im ASB/ESP-Bereich von Kraftfahrzeugen ist es notwendig, dass die Elektromotoren fluiddicht ausgebildet sind, das heißt, dass elektrische Steuer- und Versorgungsleitungen fluiddicht in das Gehäuse des Elektromotors hineingeführt werden müssen.

Aus dem Stand der Technik ist es bekannt, dass zwischen der Gehäuseöffnung und der durch diese Öffnung hindurchgeführten elektrischen Leitung eine Dichtung angeordnet ist, welche an der Isolation des elektrischen Leiters anliegt. Bei den aus dem Stand der Technik bekannten Dichtlösungen kann es jedoch zu einem ungewünschten Eindringen von Feuchtigkeit in das Gehäuseinnere durch die zwischen den einzelnen Litzen eines elektrischen Leiters angeordneten Kapillaren kommen.

Dokument WO 2011/154181 offenbart einen elektrischen Antrieb des Standes der Technik.

### Offenbarung der Erfindung

### Vorteile der Erfindung

Die Erfindung geht aus von einem elektrischer Antrieb, insbesondere einem Elektromotor eines Motorkühlungsgebläses oder eines ABS/ESP eines Kraftfahrzeugs, mit einem elektrischen Anschluss und einem Gehäuse, in dessen Gehäuseinneren eine Antriebseinrichtung angeordnet ist und wobei der elektrische Anschluss wenigstens eine, die Antriebseinrichtung kontaktierende, elektrische Leitung aufweist und wobei am Gehäuse eine Gehäuseöffnung zur Durchführung der elektrischen Leitung ausgebildet ist und im Bereich der Gehäuseöffnung eine Dichtung angeordnet ist, wobei die elektrische Leitung einen ersten Abschnitt und einen zweiten Abschnitt aufweist, wobei der erste Abschnitt einen Leiter und ein den Leiter umhüllenden Mantel aufweist und der zweite Abschnitt als freiliegender Leiter ausgebildet ist und wobei der elektrische Anschluss ein hülsenförmiges Element aufweist, in welchem der zweite Abschnitt zumindest teilweise angeordnet ist. Es wird vorgeschlagen, dass das hülsenförmige Element fluiddicht mit dem zweiten Abschnitt verbunden ist und die Dichtung zumindest teilweise an dem hülsenförmigen Element anliegt und der elektrische Anschluss gegenüber dem Gehäuseinneren im Bereich des hülsenförmigen Elementes in Erstreckungsrichtung fluiddicht ausgebildet ist.

Der erfindungsgemäße elektrische Antrieb mit den Merkmalen des unabhängigen Anspruches hat den Vorteil, dass verhindert werden kann, dass Flüssigkeit in den Zwischenräumen zwischen den einzelnen Litzen eines solchen Leiters aufgrund des Kapillareffektes in den Gehäuseinnenraum eindringen kann. Aufgrund der verbesserten Abdichtung des Gehäuseinneren kann die Lebensdauer der Antriebseinrichtung erhöht werden, da die elektrischen Bauteile im Gehäuseinneren aufgrund der elektrischen Leitfähigkeit der Flüssigkeiten mit Störungen, wie beispielsweise Kurzschlüssen oder Korrosion reagieren. Flüssigkeit beziehungsweise Wasser kann insbesondere dann in das Gehäuseinnere eintreten, wenn die elektrische Leitung beispielsweise durch einen Marderbiss verletzt wird. Aufgrund der fluiddichten Ausbildung des elektrischen Anschlusses in Erstreckungsrichtung kann in einem solchen Fall das Eindringen von Flüssigkeit in den Gehäuseinnenraum vorteilhaft verhindert werden. Die erfindungsgemäße Anordnung von Dichtung und hülsenförmigen Element zueinander ermöglicht ferner die Abdichtung jeglicher Flüssigkeitspfade in das Gehäuseinneren im Bereich des hülsenförmigen Elementes, sodass die dauerhafte Abdichtung des Gehäuseinnenraums besonders platzsparend bereitgestellt werden kann. Die Montage des hülsenförmigen Elementes kann besonders einfach durch Aufstecken des hülsenförmigen Elementes auf die elektrische Leitung erfolgen. Ferner lässt sich das erfindungsgemäße hülsenförmige Element gemäß einer vorteilhaften Ausführungsform der Erfindung mittels Tiefzeihen eines Bleches kostengünstig herstellen.

Durch die in den Unteransprüchen aufgeführten Maßnahmen ergeben sich vorteilhafte Weiterbildungen und Verbesserungen der unabhängigen Merkmale.

In einer besonders platzsparenden und kostengünstigen Ausführungsform der Erfindung ist es vorgesehen, dass das hülsenförmige Element als einseitig offenes Element ausgebildet ist und der Leiter mehrere Litzen aufweist, wobei die Litzen zueinander in einem Längsabdichtungsabschnitt in Erstreckungsrichtung fluiddicht ausgebildet sind.

Eine solche fluiddichte Ausbildung der Litzen zueinander im Längsabdichtungsabschnitt kann gemäß einer besonders bevorzugten Ausführungsform der Erfindung dadurch bereitgestellt werden, dass die Litzen und das hülsenförmige Element im Längsabdichtungsabschnittes mittels Lot fluiddicht verzinnt ausgebildet sind. Vorzugsweise ist das freie Ende der elektrischen Leitung bereits vorverzinnt. Durch die Verzinnung des Leiters und des hülsenförmigen Elementes läuft das Zinn in die Zwischenräume zwischen den einzelnen Litzen und in den Bereich zwischen der Leitung und der Hülse und dichtet den elektrischen Anschluss in Erstreckungsrichtung ab.

Eine besonders kostengünstige Ausführungsform der Erfindung sieht vor, dass das hülsenförmige Element als Aderendhülse ausgebildet ist und somit zusätzlich zu Abdichtung in Erstreckungsrichtung des elektrischen Anschlusses dazu verwendet werden kann den freiliegenden Leiter zu schützen, sodass dieser ohne Beschädigung der einzelnen Litzen an die Antriebseinrichtung angeschlossen werden kann. Durch die Verwendung eines solchen hülsenförmigen Elementes kann somit in vorteilhafter Weise auf ein Vorverzinnen des abisolierten Endes der elektrischen Leitung verzichtet werden, da dieses in dem hülsenförmigen Element geschützt ist und die Litzen nicht auseinander spleißen.

Eine weitere vorteilhafte Ausführungsform der Erfindung sieht vor, dass das hülsenförmige Element als einseitig geschlossenes Element ausgebildet ist und zumindest teilweise mit dem zweiten Abschnitt der elektrischen Leitung verschweißt ausgebildet ist. Aufgrund der geschlossenen Hülse kann keine Flüssigkeit mehr in Erstreckungsrichtung des elektrischen Anschlusses in das Gehäuseinnere durch die Kapillaren zwischen den Litzen transportiert werden. Vorteilhafter Weise ist eine solche Hülse aus einem Metall, wie beispielsweise Kupfer, verzinntes Kupfer, Aluminium oder Edelstahl ausgebildet. Um die Korrosionsbeständigkeit zu erhöhen kann es überdies vorgesehen sein, dass die Hülse im Längsdichtungsabschnitt beschichtet ist.

Eine vorteilhafte Ausführungsform der Erfindung sieht vor, dass die Dichtung als Mattendichtung ausgebildet ist. Mittels einer solche Mattendichtung beziehungsweise Elastomerdichtung kann in besonderes vorteilhafter Weise eine umlaufende Abdichtung zum hülsenförmigen Element und alternativ hierzu oder zusätzlich zum Mantel der elektrischen Leitung bereitgestellt werden. Es ist jedoch auch denkbar, dass die Dichtung als Schrumpfschlauch, als Elastomerschlauch oder als Dichtband ausgebildet ist.

### Zeichnung

Ausführungsbeispiele der Erfindung sind in den Figuren dargestellt und in der nachfolgenden Beschreibung näher erläutert. Es zeigen:
- Figur 1: einen Ausschnitt eines erfindungsgemäßen elektrischen Antriebes in einer Explosionsdarstellung,
- Figur 2: eine Schnittdarstellung eines erfindungsgemäßen elektrischen Antriebes gemäß einer ersten Ausführungsform,
- Figur 3: eine vergrößerte Darstellung einer ersten Ausführungsform eines elektrischen Anschlusses,
- Figur 3a: den Querschnitt durch einen elektrischen Anschluss entlang der Schnittverlaufslinie AA in Figur 3,
- Figur 4a: eine Schnittdarstellung eines Ausschnittes eines elektrischen Antriebes mit einem elektrischen Anschluss gemäß einer zweiten Ausführungsform,
- Figur 4b: eine Schnittdarstellung eines Ausschnittes eines elektrischen Antriebes mit einem elektrischen Anschluss gemäß einer dritten Ausführungsform.

### Beschreibung

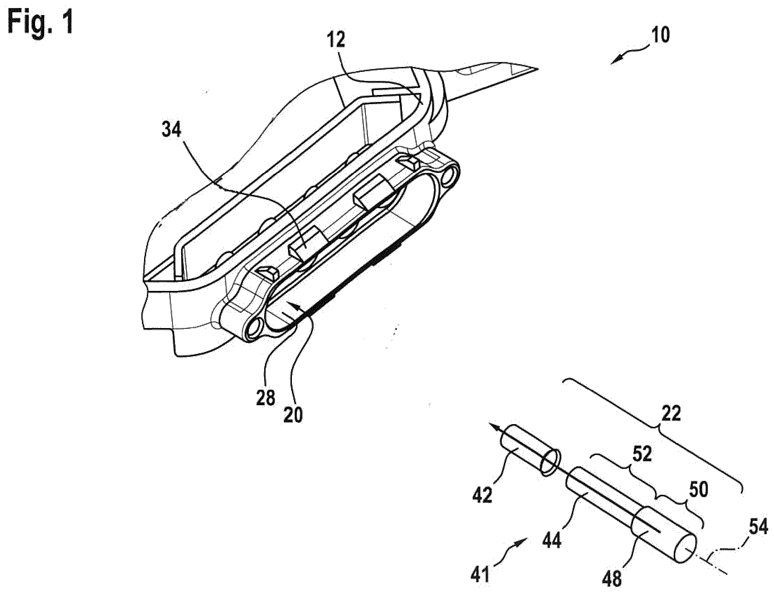

Figur 1 zeigt einen Ausschnitt eine Perspektivansicht eines elektrischen Antriebes 10 gemäß einer ersten Ausführungsform. Wie in Figur 1 zu erkennen ist, ist im Gehäuseinneren 14 des Gehäuses 12 des elektrischen Antriebes 10 die Antriebseinrichtung 16 mit der elektronischen Steuereinheit 18 angeordnet. Am Gehäuse 12 ist eine Gehäuseöffnung 20 ausgebildet, durch welche wenigstens ein elektrischer Anschluss 22 in das Gehäuseinnere 14 geführt ist. Innerhalb des Gehäuses 12 sind die elektrischen Anschlüsse 22 an Anschlusseinrichtungen anschließbar, wobei die elektrischen Leitungen den Elektromotor 10 mit elektrischer Leistung für eine Drehmomenterzeugung versorgen und alternativ hierzu oder zusätzlich Steuersignale an diesen Übermitteln beziehungsweise Signale aus diesem herausführen.

Wie in Figur 1 deutlich zu erkennen ist, ist im Bereich der Gehäuseöffnung 20 ferner eine Dichtung 24 vorgesehen. Zur Aufnahme der Dichtung 24 ist gemäß einer vorteilhaften Weiterbildung der Erfindung ein am Gehäuse 12 ausgebildeter Vorsprung 26 vorgesehen. Gemäß einer vorteilhaften Weiterbildung der Erfindung weist dieser Vorsprung 26 eine im Wesentlichen quaderförmige Kontur mit einem sich in Längsrichtung erstreckenden Innenaufnahmebereich 28 auf. Die Dichtung 24 ist vorzugsweise im Wesentlichen zumindest teilweise innerhalb des durch den Vorsprung 26 gebildeten Innenaufnahmebereiches 28 angeordnet. Zur Fixierung beziehungsweise Befestigung des elektrischen Anschlusses 22 und alternativ hierzu oder zusätzlich der Dichtung 24 am Gehäuse 12 ist ferner ein Steckerelement 30 vorgesehen.

Vorzugsweise weist das Steckerelement 30 eine zum Vorsprung 26 korrespondierende Form auf und wird bei der Montage axial auf den Vorsprung 26 aufgeschoben. Hierbei ist es bevorzugt, dass das Steckerelement 30 am Gehäuse 12 beziehungsweise Vorsprung 26 verriegelt ist. Eine solche Verriegelung kann beispielsweise über am Steckerelement 30 ausgebildete Rasteinrichtungen 32, wie beispielsweise Rasthaken erfolgen, welche am Gehäuse 12 an geeigneten Rasteinrichtungen, wie beispielsweise einem Rastvorsprung 34 verrasten. Ferner ist eine Verriegelung mittels einer Verriegelungsfeder oder Sicherungsfeder möglich. Vorzugsweise ist eine Verriegelungsfeder derart ausgebildet, dass das Steckerelement axial auch bei Schüttelbelastungen des elektrischen Antriebes 10 am Gehäuse 12 beziehungsweise Vorsprung 26 hält. Gemäß einer vorteilhaften Weiterbildung der Erfindung ist die Dichtung 24 als Mattendichtung, vorzugsweise als Radialdichtung ausgebildet. Überdies ist es auch denkbar, dass die Mattendichtung 24 eine kombinierte Radial- und Axialdichtung bereitstellt. Wie bereits eingangs erläutert ist gemäß der nunmehr verwendeten Nomenklatur unter einer Radialdichtung eine radial belastete Dichtung 24 zu verstehen, welche in Axialrichtung abdichtet. Die Dichtung 24 ist im Innenaufnahmebereich 28 des Gehäuses 12 angeordnet und zwischen dem Gehäuse 12 und dem Steckerelement 30 verklemmt. Zur verbesserten Sichtbarkeit ist in Figur 1 lediglich das untere Segment der Dichtung 24 abgebildet. Übelicherweise entspricht das entsprechende Decksegment (hier nicht dargestellt) im Wesentlichen dem in Figur 1 dargestellten Segment. Vorzugsweise ist eine solche Dichtung 24 einstückig ausgebildet. Zur Abdichtung am Gehäuse 12 weist die Dichtung 24 wenigstens eine äußere Radialdichtlippe 36 auf. Im montierten Zustand wird diese Radialdichtlippe 36 an den Innenaufnahmebereich 28 des Vorsprungs 26 angedrückt. Vorzugsweise weist die Dichtung 24 eine Mehrzahl an äußeren Radialdichtlippen 36 auf, welche umlaufend an Außenfläche der Mattendichtung ausgebildet sind.

Wie in Figur 1 zu erkennen ist, wird die elektrische Leitung 22 von außen her durch die Gehäuseöffnung 20 in das Gehäuseinnere 14 geführt. Der elektrische Anschluss 22 wird dabei durch eine in der Dichtung 24 vorgesehene Durchgangsöffnung 38 hindurchgeführt. In der Durchgangsöffnung 38 erfolgt eine Abdichtung des elektrischen Anschlusses 22 über zumindest eine in der Durchgangsöffnung 38 an der Dichtung 24 ausgebildete innere Radialdichtlippe 40. Wie dargestellt, können beispielsweise mehrere umlaufende innere Radialdichtlippen 40 vorgesehen sein, welche im montierten Zustand an einer Oberfläche des elektrischen Anschlusses 22 dichtend anliegen. Die Dichtung 24 umschließt den elektrischen Anschluss 22 umlaufend dichtend und dichtet zusätzlich zwischen dem Gehäuse 12, beziehungsweise dem Innenaufnahmebereich 28 des Vorsprungs 26 und dem elektrischen Anschluss 22 fluiddicht ab.

Der elektrische Anschluss 22 umfasst eine elektrische Leitung 41 und ein hülsenförmiges Element 42. Die elektrische Leitung 41 weist einen Leiter 44 auf, welcher aus einem elektrisch leitenden Material, wie beispielsweise Kupfer oder einer Kupferlegierung ausgebildet ist. Gemäß einer Ausführungsform der Erfindung ist der Leiter 44 aus einer Mehrzahl an einzelnen Litzen 46 beziehungsweise Einzeldrähten ausgebildet. Der Leiter 44 der elektrischen Leitung ist, wie in Figur 1 deutlich zu erkennen ist, zumindest abschnittsweise von einem schlauchförmigen Mantel 48 umhüllt, welcher den Leiter 44 nach außen elektrisch isoliert. Ein solcher Mantel 48 kann beispielsweise als PVC-Mantel oder als Redox-Mantel ausgebildet sein. Erfindungsgemäß weist die elektrische Leitung 41 einen ersten Abschnitt 50 und einen zweiten Abschnitt 52 auf. Der zweite Abschnitt 52 ist erfindungsgemäß dem freien Ende der elektrischen Leitung 40 angeordnet und als freiliegender Leiter ausgebildet, das heißt er ist nicht von dem Mantel 48 umhüllt. Der Mantel 48 kann im zweiten Abschnitt 52 der elektrischen Leitung 41 beispielhaft entfernt worden sein. Alternativ kann bei der Herstellung der elektrischen Leitung 41 in deren zweiten Abschnitt 52 zu keinem Zeitpunkt der Mantel 48 angeordnet gewesen sein. Entsprechend weist der erste Abschnitt 51 einen Leiter 44 und einen den Leiter 44 umhüllenden Mantel 48 auf. Vorzugsweise sind die beiden Abschnitte 50, 52 in Erstreckungsrichtung 54 der elektrischen Leitung 40 benachbart zueinander angeordnet.

Erfindungsgemäß weist, wie bereits erwähnt, der elektrische Anschluss 22 zusätzlich zur elektrischen Leitung 41 ein hülsenförmiges Element 42 auf. Wie in Figur 1 zu erkennen ist, weist das hülsenförmige Element 42 gemäß einer vorteilhaften Ausführungsform der Erfindung eine im wesentlichen hohlzylindrische Form auf. Figur 1 zeigt eine erste Ausführungsform der Erfindung gemäß welcher das hülsenförmige Element 42 als beidseitig offenes Element ausgebildet ist. Bei der Herstellung des elektrischen Antriebes 10 wird das hülsenförmige Element 42 auf die elektrische Leitung 41 aufgeschoben und fluiddicht mit dem zweiten Abschnitt 52 der elektrischen Leitung 41 verbunden. Grundsätzlich kann Flüssigkeit im Bereich des elektrischen Anschlusses 22 zwischen der Dichtung 24 und dem elektrischen Anschluss 22, zwischen dem Mantel 48 und dem Leiter 44 und den zwischen den einzelnen Litzen 46 des Leiters 44 in das Gehäuseinnere 14 eindringen. Um dies zu vermeiden ist der zweite Abschnitt 52 des elektrischen Anschlusses 22 zumindest teilweise im hülsenförmigen Element angeordnet, ist das hülsenförmige Element 56 fluiddicht mit dem zweiten Abschnitt 52 verbunden, liegt ein Dichtungsabschnitt der Dichtung 24 zumindest teilweise an dem hülsenförmigen Element 56 an und ist die elektrische Leitung 41 gegenüber dem Gehäuseinneren 14 in Erstreckungsrichtung 54 fluiddicht ausgebildet. Vorzugsweise ist das hülsenförmige Element 42 aus einem Metall, besonders vorzugsweise aus Kupfer, verzinnten Kupfer, Aluminium, Edelstahl oder einer Kombination dieser aufgebaut.

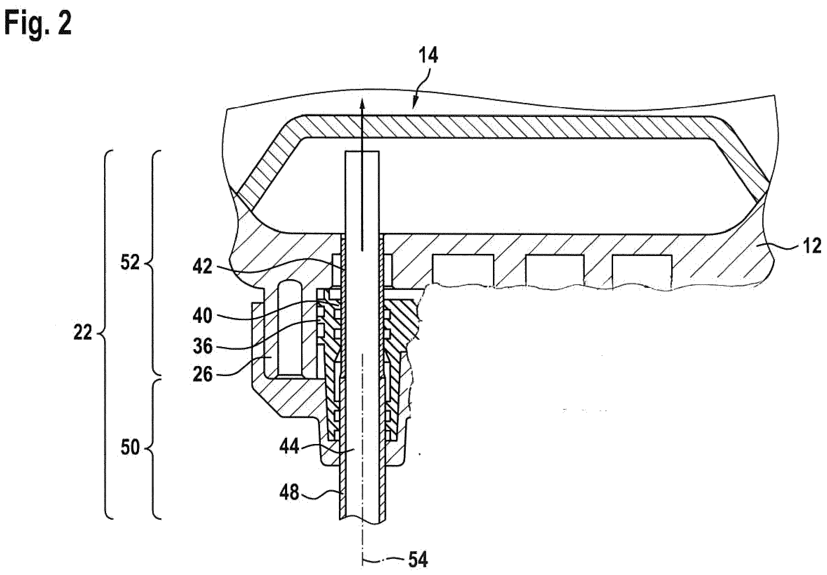

Figur 2 zeigt den in Figur 1 dargestellten Ausschnitt des elektrischen Antriebes 10 im montierten Zustand in einer Schnittdarstellung. Der elektrische Anschluss 22 ist durch eine Gehäuseöffnung 20 in das Gehäuseinnere 14 durchgeführt und dort elektrisch mit der Antriebeinrichtung kontaktiert. Im Bereich der Gehäuseöffnung ist eine Dichtung 24 angeordnet. Gemäß der in Figur 2 dargestellten Ausführungsform der Erfindung ist die Dichtung 24 als Mattendichtung ausgebildet. Wie in Figur 2 deutlich zu erkennen ist, erfolgt liegt die Dichtung 24 mit einem ersten Dichtungsabschnitt an dem hülsenförmigen Element 42 dichtend an und mit einem zweiten Dichtungsabschnitt an dem isolierenden Mantel 48 auf diese Weise kann eine besonders dichte Anordnung bereitgestellt werden. Zu diesem Zweck weist die Mattendichtung eine Mehrzahl an inneren Radialdichtlippen 40 auf, welche sowohl am hülsenförmigen Element 42 als auch am Mantel 48 anliegen. Das hülsenförmige Element 42 ist gemäß der in Figur 2 dargestellten Ausführungsform der Erfindung als einseitig offenes Element ausgebildet.

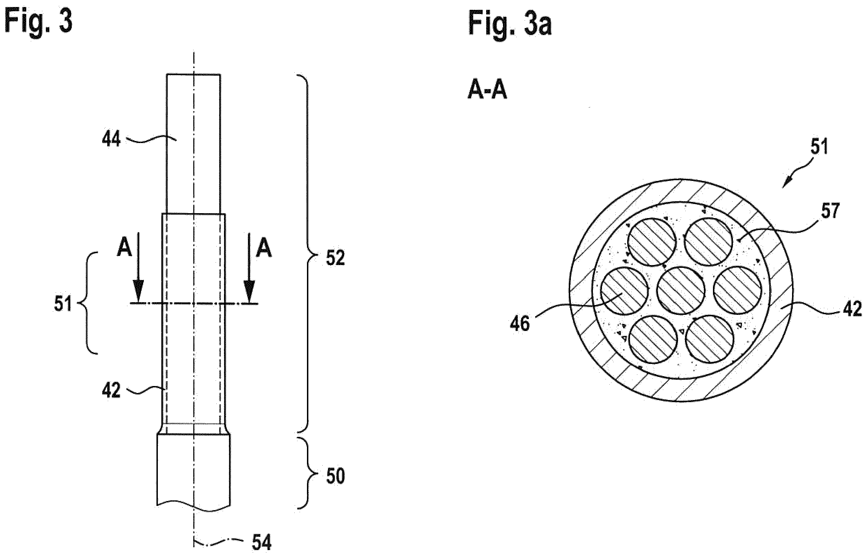

Figur 3 zeigt eine vergrößerte Darstellung des elektrischen Anschlusses 22 aus Figur 2. Wie in Figur 3 deutlich zu erkennen ist, ist das hülsenförmige Element als einseitig offene Hülse ausgebildet, welche auf die elektrische Leitung aufgesteckt wird. Gemäß der in Figur 3 dargestellten Ausführungsform wird das hülsenförmige Element bis zur Stirnseite des Mantels 48 aufgeschoben. Die Länge des hülsenförmigen Elementes 42 ist dabei derart bemessen, dass oberhalb des hülsenförmigen Elementes ein Abschnitt des freiliegenden Leiters 44 verbleibt. Gemäß einer vorteilhaften Weiterbildung der Erfindung ist das hülsenförmige Element 42 nunmehr in einem Längsabdichtungsabschnitt 51 mit dem Leiter 44 gemeinsam verzinnt.

Figur 3a zeigt einen Querschnitt eines elektrischen Anschlusses 22, im Längsabdichtungsabschnitt 51 des hülsenförmigen Elementes 56 entlang der Schnittverlaufslinie AA. Wie in Figur 3a deutlich zu erkennen ist, sind die als Kapillaren ausgebildeten Zwischenräume zwischen den einzelnen Litzen 46 mit Lot 57 gefüllt. Auf diese Weise kann ein im Wesentlichen hohlraumfreier Querschnitt des elektrischen Anschlusses 22 bereitgestellt werden, welcher somit in Erstreckungsrichtung 54 fluiddicht verschlossen ist. Wie in Figur 3a zu erkennen ist, sind sowohl die Zwischenräume zwischen den einzelnen Litzen 46 mit Lot 57 vollständig verzinnt, als auch den Litzen 46 und dem hülsenförmigen Element 42. Ein solcher, verzinnter elektrischer Anschluss 22 dichtet in besonders vorteilhafter Weise den Gehäuseinnenraum 14 gegenüber Flüssigkeiten ab, welche durch Kapillareffekte von außen in Längsrichtung durch den Leiter 44 in das Gehäuseinnere 14 transportiert werden können.

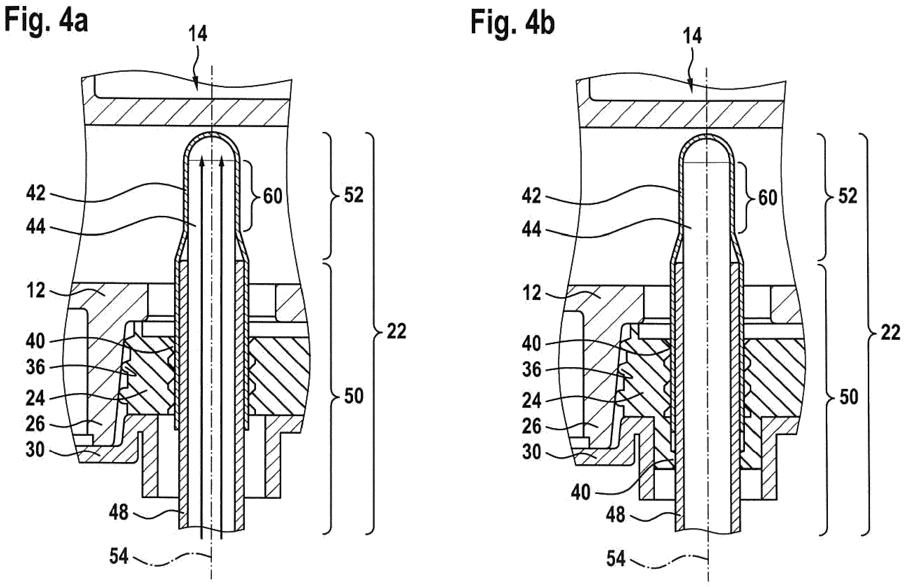

Figur 4a zeigt eine weitere Ausführungsform der Erfindung. Wie in Figur 4a zu erkennen ist, ist das hülsenförmige Element 42 als einseitig geschlossenes Element ausgebildet. Gemäß einer vorteilhaften Ausführungsform der Erfindung liegt das hülsenförmige Element 42 im montierten Zustand am ersten Abschnitt 50 und am zweiten Abschnitt 52 an. Zur fluiddichten Verbindung zwischen dem Leiter 44 und dem hülsenförmigen Element 42 wird das hülsenförmige Element 41 in einem Verschweißungsabschnitt 60 des elektrischen Anschlusses 22 mit dem Leiter 44 verschweißt. Aufgrund der einseitig geschlossenen Ausbildung des hülsenförmigen Elementes 42 ist der elektrische Anschluss 22 in Erstreckungsrichtung 54 fluiddicht ausgebildet, sodass Flüssigkeiten 11 nicht durch die Hohlräume zwischen den Litzen 46 in das Gehäuseinnere 14 eindringen können. Wie in Figur 4 deutlich zu erkennen ist, liegt die Dichtung 42 mit den inneren Radialdichtlippen 40 umlaufend dichtend im Bereich des ersten Abschnittes 50 am hülsenförmigen Element 42 an. Auf diese Weise kann eine Längswasserdichte Durchführung des elektrischen Anschlusses 22 in das Gehäuse 12 bereitgestellt werden.

Figur 4b zeigt die in Figur 4a gezeigte Ausführungsform der Erfindung mit dem Unterschied, dass die Dichtung 24 eine zusätzliche innere Radialdichtlippe 40 aufweist, welche umlaufend dichtend auf dem Mantel 48 des ersten Abschnittes 50 anliegt, sodass die Abdichtung zwischen elektrischem Anschluss 22 und dem Gehäuse 12 eine zusätzliche, zweite Dichtebene aufweist.

Gemäß einer weiteren vorteilhaften Ausführungsform der Erfindung ist es auch denkbar, dass das hülsenförmige Element 42 in einem Crimpbereich mit der elektrischen Leitung 41 vercrimpt, beziehungsweise verpresst ist. Vorzugsweise ist der Crimpbereich im Bereich des zweiten Abschnittes 52 angeordnet. Durch die Vercrimpung zwischen dem Leiter 44 des zweiten Abschnittes 52 und dem hülsenförmigen Element 42 kann in vorteilhafter Weise eine mechanische, fluiddichte Verbindung zwischen dem hülsenförmigen Element 41 und dem Leiter 44 bereitgestellt werden. Gemäß einer vorteilhaften Ausführungsform der Erfindung wird der Leiter 44 im Crimpbereich derart verpresst, dass die Zwischenräume zwischen den einzelnen Litzen 46 geschlossen werden. Auf diese Weise kann ein in Erstreckungsrichtung 54 fluiddicht ausgebildeter Leiter 44 bereitgestellt werden. Gemäß einer besonders vorteilhaften Ausführungsform können neben dem ersten Crimpbereich noch weitere Crimpbereiche am elektrischen Anschluss 22 vorgesehen sein.

## Patentansprüche

1. Elektrischer Antrieb (10), insbesondere Elektromotor eines Motorkühlungsgebläses oder eines ABS/ESP eines Kraftfahrzeugs, mit einem elektrischen Anschluss (22) und einem Gehäuse (12), in dessen Gehäuseinneren (14) eine Antriebseinrichtung (16) angeordnet ist und wobei der elektrische Anschluss (22) wenigstens eine, die Antriebseinrichtung (16) kontaktierende, elektrische Leitung (41) aufweist und wobei am Gehäuse (12) eine Gehäuseöffnung (20) zur Durchführung der elektrischen Leitung (41) ausgebildet ist und im Bereich der Gehäuseöffnung (20) eine Dichtung (24) angeordnet ist, wobei die elektrische Leitung (41) einen ersten Abschnitt (50) und einen zweiten Abschnitt (52) aufweist, wobei der erste Abschnitt (50) einen Leiter (44) und ein den Leiter (44) umhüllenden Mantel (48) aufweist und der zweite Abschnitt (52) als freiliegender Leiter (44) ausgebildet ist und wobei der elektrische Anschluss (22) ein hülsenförmiges Element (42) aufweist, in welchem der zweite Abschnitt (52) zumindest teilweise angeordnet ist, **dadurch gekennzeichnet, dass** das hülsenförmige Element (42) fluiddicht mit dem zweiten Abschnitt (52) verbunden ist und die Dichtung (24) zumindest teilweise an dem hülsenförmigen Element (42) anliegt und der elektrische Anschluss (22) gegenüber dem Gehäuseinneren (14) im Bereich des hülsenförmigen Elementes (42) in Erstreckungsrichtung (54) fluiddicht ausgebildet ist.

2. Elektrischer Antrieb (10) nach Anspruch 1, **dadurch gekennzeichnet, dass** das hülsenförmige Element (42) als einseitig offenes Element ausgebildet ist und der Leiter (44) mehrere Litzen (46) aufweist, wobei die Litzen (46) zueinander in einem Längsabdichtungsabschnitt (51) in Erstreckungsrichtung (54) fluiddicht ausgebildet sind.

3. Elektrischer Antrieb (10) nach einem der vorhergehenden Ansprüche, **dadurch gekennzeichnet, dass** die Litzen (46) und das hülsenförmige Element (42) im Längsabdichtungsabschnittes (51) mittels Lot (57) fluiddicht verzinnt ausgebildet sind.

4. Elektrischer Antrieb (10) nach einem der vorhergehenden Ansprüche, **dadurch gekennzeichnet, dass** das hülsenförmige Element (42) als Aderendhülse ausgebildet ist.

5. Elektrischer Antrieb (10) nach Anspruch 1, **dadurch gekennzeichnet, dass** das hülsenförmige Element (42) als einseitig geschlossenes Element ausgebildet ist und zumindest teilweise mit dem zweiten Abschnitt (52) der elektrischen Leitung (41) verschweißt ausgebildet ist.

6. Elektrischer Antrieb (10) nach einem der vorhergehenden Ansprüche, **dadurch gekennzeichnet, dass** die Dichtung (24) als Mattendichtung ausgebildet ist.

7. Elektrischer Antrieb (10) nach einem der vorhergehenden Ansprüche, **dadurch gekennzeichnet, dass** das hülsenförmige Element (42) aus einem Metall, vorzugsweise aus Kupfer, verzinnten Kupfer, Aluminium, Edelstahl oder einer Kombination dieser aufgebaut ist.

## Claims

1. Electric drive (10), in particular electromotor of an engine cooling fan or an ABS/ESP system of a motor vehicle, with an electric connection (22) and a housing (12), in the housing interior (14) of which a drive device (16) is arranged, and wherein the electric connection (22) has at least one electric line (41) contacting the drive device (16), and wherein a housing opening (20) for the passage of the electric line (41) is formed on the housing (12) and a seal (24) is arranged in the region of the housing opening (20), wherein the electric line (41) has a first section (50) and a second section (52), wherein the first section (50) has a conductor (44) and a sheath (48) enclosing the conductor (44), and the second section (52) takes the form of an exposed conductor (44), and wherein the electric connection (22) has a sleeve-like element (42) in which the second section (52) is at least partially arranged, **characterized in that** the sleeve-like element (42) is connected to the second section (52) in a fluid-tight fashion and the seal (24) bears at least partially on the sleeve-like element (42) and the electric connection (22) is designed so that it is fluid-tight with respect to the housing interior (14) in the region of the sleeve-like element (42) in the direction of extent (54).

2. Electric drive (10) according to Claim 1, **characterized in that** the sleeve-like element (42) takes the form of an element which is open on one side and the conductor (44) has a plurality of strands (46), wherein the strands (46) are designed so that they are fluid-tight with respect to one another in a longitudinal sealing section (51) in the direction of extent (54).

3. Electric drive (10) according to one of the preceding claims, **characterized in that** the strands (46) and the sleeve-like element (42) are designed so that they are fluid-tight fashion and tin-plated by means of solder (57) in the longitudinal sealing section (51).

4. Electric drive (10) according to one of the preceding claims, **characterized in that** the sleeve-like element (42) takes the form of a wire end ferrule.

5. Electric drive (10) according to Claim 1, **characterized in that** the sleeve-like element (42) takes the form of an element which is closed on one side and is designed so that it is welded at least partially to the second section (52) of the electric line (41).

6. Electric drive (10) according to one of the preceding claims, **characterized in that** the seal (24) takes the form of a mat seal.

7. Electric drive (10) according to one of the preceding claims, **characterized in that** the sleeve-like element (42) is constructed from a metal, preferably from copper, tin-plated copper, aluminum, stainless steel, or a combination thereof.

## Revendications

1. Entraînement électrique (10), en particulier moteur électrique d'un ventilateur de refroidissement de moteur ou d'un ABS/ESP d'un véhicule automobile, comprenant une borne électrique (22) et un boîtier (12) dans l'espace intérieur de boîtier (14) duquel est disposé un dispositif d'entraînement (16), et la borne électrique (22) présentant au moins une ligne électrique (41) établissant un contact avec le dispositif d'entraînement (16), et une ouverture de boîtier (20) étant réalisée sur le boîtier (12) pour faire passer la ligne électrique (41), et un joint d'étanchéité (24) étant disposé au niveau de l'ouverture de boîtier (20), la ligne électrique (41) présentant un premier tronçon (50) et un deuxième tronçon (52), le premier tronçon (50) présentant un conducteur (44) et une gaine (48) enveloppant le conducteur (44), et le deuxième tronçon (52) étant réalisé sous la forme d'un conducteur dénudé (44), et la borne électrique (22) présentant un élément (42) en forme de manchon dans lequel le deuxième tronçon (52) est disposé au moins partiellement,
**caractérisé en ce que** l'élément en forme de manchon (42) est relié au deuxième tronçon (52) de manière étanche aux fluides, et le joint d'étanchéité (24) est appliqué au moins partiellement contre l'élément en forme de manchon (42), et la borne électrique (22) est réalisée de manière étanche aux fluides par rapport à l'espace intérieur de boîtier (14) au niveau de l'élément en forme de manchon (42) dans la direction d'étendue (54).

2. Entraînement électrique (10) selon la revendication 1, **caractérisé en ce que** l'élément en forme de manchon (42) est réalisé comme un élément ouvert d'un côté, et le conducteur (44) présente plusieurs fils (46), les fils (46) étant réalisés de manière étanche aux fluides les uns par rapport aux autres dans un tronçon d'étanchéité longitudinal (51) dans la direction d'étendue (54).

3. Entraînement électrique (10) selon l'une quelconque des revendications précédentes, **caractérisé en ce que** les fils (46) et l'élément en forme de manchon (42) sont réalisés en étant étamés au moyen d'un métal d'apport (57) dans le tronçon d'étanchéité longitudinal (51).

4. Entraînement électrique (10) selon l'une quelconque des revendications précédentes, **caractérisé en ce que** l'élément en forme de manchon (42) est réalisé comme un manchon de bout de toron.

5. Entraînement électrique (10) selon la revendication 1, **caractérisé en ce que** l'élément en forme de manchon (42) est réalisé comme un élément fermé d'un côté, et est réalisé en étant soudé au moins partiellement avec le deuxième tronçon (52) de la ligne électrique (41).

6. Entraînement électrique (10) selon l'une quelconque des revendications précédentes, **caractérisé en ce que** le joint d'étanchéité (24) est réalisé comme un joint d'étanchéité natté.

7. Entraînement électrique (10) selon l'une quelconque des revendications précédentes, **caractérisé en ce que** l'élément en forme de manchon (42) est composé d'un métal, de préférence de cuivre, de cuivre étamé, d'aluminium, d'acier spécial ou d'une combinaison de ceux-ci.
